# EUROPEAN PATENT APPLICATION

(11) **EP 4 776 759 A1**
(43) Date of publication of application: **15.07.2026**
(21) Application number: 25222419.1
(22) Date of filing: 10.12.2025
(51) Int. Cl.: H05H 1/00, G01J 3/02

(54) **A SENSOR AND A METHOD FOR SIMULTANEOUS MEASUREMENT OF CHARGED PARTICLES AND MOLECULAR FRAGMENTS DENSITY IN NON-EQUILIBRIUM GASEOUS PLASMA OR ITS AFTERGLOW**

(71) Applicant: Univerza v Mariboru, 2000 Maribor (SI); Jozef Stefan Institute, 1000 Ljubljana (SI)
(72) Inventor: Donlagic, Denis, 2000 Maribor (SI); Pevec, Simon, 2000 Maribor (SI); Njegovec, Matej, 2000 Maribor (SI); Zaplotnik, Rok, 1000 Ljubljana (SI); Primc, Gregor, 1000 Ljubljana (SI); Mozetic, Miran, 1000 Ljubljana (SI)
(74) Representative: Patentni Biro AF d.o.o.

(57) **Abstract**

The present invention relates to devices and methods for the characterization of non-equilibrium gaseous plasma sustained in molecular gases. The methods enable simultaneous measurements of the density of both positively charged ions and molecular radicals. The sensor for a device that simultaneously measures the density of charged particles and molecular fragments in a non-equilibrium gaseous plasma or its afterglow comprises an optical fiber with at least two temperature-sensing segments exhibiting different coefficients for the surface association of neutral molecular radicals to form stable molecules. At least one temperature-sensing segment is covered or in contact with a material that exhibits a high coefficient for a surface association of atoms to parent molecules, and at least one sensing segment is not covered or in contact with any material that exhibits a high coefficient for a surface association of atoms to parent molecules. The measured difference in temperatures of at least two temperature-sensing segments is then correlated to the density/flux of charged particles and molecular fragments, and thus the density in the vicinity of the sensor.

## Description

### Field of the invention

The invention relates to sensors and methods for characterizing non-equilibrium gaseous plasma sustained in molecular gases, particularly for determining the density of charged particles and molecular fragments in non-equilibrium gaseous plasma.

### Background of the invention and the technical problem

Plasma is an ionized gas that comprises ions, free electrons, excited molecules, and molecular fragments (sometimes called "radicals"). Molecular fragments of diatomic molecules (like O₂, N₂, H₂, F₂) are atoms, whereas molecular fragments of multi-atom molecules may consist of more atoms. For example, the molecular fragments of ammonia (NH₃) are N, NH, NH₂ and H. Molecular fragments of methane (CH₄) are C, CH, CH₂, CH₃ and H. A non-equilibrium plasma (also known as nonthermal plasma or cold plasma) is a plasma that is not in thermodynamic equilibrium, because the electron temperature is much higher than the temperature of heavy species (ions and neutrals). Non-equilibrium gaseous plasma is widely used to tailor the surface properties of solid materials. Molecules that are stable at room or even elevated temperatures are partially ionized and dissociated in non-equilibrium gaseous plasma. The density of charged particles and neutral molecular fragments in non-equilibrium plasma is practically independent of the gas temperature, but depends on numerous external parameters, including but not limited to the dimensions and geometry of the plasma reactor, the type of discharge used for sustaining plasma, the discharge coupling, the gas composition, partial pressures, and flow rates, and the geometry and surface properties of products facing the plasma. The densities of both charged and neutral plasma species vary significantly with those parameters, so the densities cannot be predicted by modelling. Furthermore, the density of plasma species is not uniform in the entire plasma reactor, but gradients are often observed. The density may also be time-dependent, even if the external parameters remain unchanged. Due to these facts, the density of plasma species should be measured, preferably with a method that is robust and reliable and enables good spatial and temporal resolution.

Various methods for plasma characterization have been invented, and some are also used in industrial practice. The methods rely on different effects, so none is particularly useful for the determination of the density of both charged particles and molecular fragments that are neutral. Non-equilibrium gaseous plasma usually exhibits a significant difference in the density of charged particles and molecular fragments. While the density of free electrons and positively charged ions in non-equilibrium plasma, useful for tailoring surface properties of solid materials, is often between about 10¹⁴ and 10¹⁸ m⁻³, the density of molecular fragments is much higher, for example, in the range between about 10¹⁹ and 10²² m⁻³.

The density of charged particles in non-equilibrium plasma is usually measured with electrical probes, often called »Langmuir probes«. One or more electrodes are immersed in the plasma and biased with an external voltage source, and the current-to-voltage characteristics enable the calculation of electron and ion densities, sometimes also the electron temperature, which is typically a few 10,000 K in non-equilibrium plasmas useful for tailoring surface properties of solid materials. More sophisticated methods for measuring the density of charged particles have been developed, for example, Thompson scattering, which relies on the scattering of laser radiation.

Numerous methods for estimating or determining the density of molecular fragments with quite precise accuracy have been developed. The oldest one still used nowadays is calorimetry. A piece of catalytic material is immersed in the plasma, and the energy flux is determined by measuring the temperature of the catalytic material. The temperature of a catalytic material in plasma is higher than the gas temperature due to exothermic surface reactions, particularly the association of molecular radicals to form parent stable molecules. The method is robust but not very precise because the material is heated by several reactions, not only the surface association of molecular radicals.

The density of neutral atoms in non-equilibrium plasma sustained in molecular gases can be measured by actinometry. This technique relies on optical emission from plasma. An actinometer (typically argon or another noble gas) is added to the original gas, and the relative intensity of the optical emission arising from excited Ar atoms and atoms of the molecular gas enables estimation of the density of the molecular gas atoms. Alternatively, optical absorption is employed, where the plasma is illuminated with a flux of photons, and the loss of photons is attributed to absorption by the atoms. The most sophisticated version of optical absorption spectroscopy is TALIF (two-photon absorption laser-induced fluorescence). TALIF is often reliable and accurate, but not very practical for real-time monitoring of the density of atoms in plasma sustained in molecular gases.

As non-equilibrium plasma comprises different species of particles and molecular fragments, it is desirable to have a method suitable for the simultaneous measurement of both charged particles and molecular fragments, thereby avoiding the need for multiple instruments that can interfere with each other. A further aim of the invention is to provide a device configured to perform the method.

### Prior art

The density of nitrogen atoms can be measured by titration, i.e., a reactant is added to a gas rich in N atoms, and a chemical reaction occurs. Such a method is disclosed in JP5295237 (B2). The reactant, often NO gas, is dosed into the non-equilibrium gas rich in N atoms. The NO interacts with N, forming an excited molecule N₂O*, which de-excites almost immediately by irradiation of a photon (N₂O* → N₂O + γ).

The intensity of radiation is proportional to the dose of NO, and the N density is determined from a known dose of NO, taking into account reaction probabilities.

A combination of optical emission and laser irradiation to provide an additional optical signal for determining the density of atoms in non-equilibrium gaseous plasma is disclosed in patent JP5938592. This method comprises the steps of:
- generating plasma using a plasma generation gas;
- measuring a light emission intensity caused by downward transition from the excitation state of the gas in the plasma, and a light emission intensity caused by downward transition from the excitation state of impurity atoms in the plasma;
- irradiating the plasma with laser beams, and measuring the intensity of the beam not absorbed by the gas and transmitting through the plasma from among the laser beams and a fluorescence intensity of the gas by laser stimulation;
- acquiring the density of the gas being downwardly transitioning by using an optical absorption coefficient of the gas calculated from the intensity of the transmitted beam obtained by the measuring step and using the fluorescence intensity of the gas;
- calculating the density of the impurities by using the density and a light emission intensity ratio between the light emission intensity caused by downward transition from the excitation state of the gas and the light emission intensity caused by downward transition from the excitation state of the impurities in the plasma.

A method for accurately measuring atoms in plasma is disclosed in the patent US7782463. The method is based on the spectrum diffraction of the absorbance of a photon flux for illumination of gaseous plasma. This document also discloses a particle density measuring probe for measuring the density of atoms or molecules in a plasma atmosphere by absorption spectroscopy, the particle density measuring probe comprising:
- a cylindrical light guiding member provided in the plasma atmosphere, the light guiding member including:
- a reflection plate for reflecting light that has propagated through the light guiding member, the reflection plate is provided at the front end of the light guiding member; and
- a plasma introducing portion in which, in a cross section perpendicular to the longitudinal direction of the light guiding member, a part devoid of a portion of wall surface is provided behind the reflection plate by a predetermined length in the longitudinal direction, and which allows mutual contact between the light passing through the part and atoms or molecules in the plasma atmosphere; and
- a main body that guides light in an axial direction by total reflection by a side wall, the main body being located behind the plasma introducing portion.

Patent application JP2012093364 describes a particle density measurement probe that measures atomic density in a plasma atmosphere through spectrophotometry, i.e., by determining the intensity of visible radiation arising from gaseous plasma. For this purpose, the particle density measurement probe is designed as a columnar light guide body provided in the plasma atmosphere, and has a reflection plate, which reflects light propagated in the light guide body at a tip part thereof, and a plasma introduction part in front of the reflection body, the plasma introduction part being formed such that a part where a partial wall surface is missing in a section perpendicular to the length direction of the light guide body is formed to a predetermined length in the length direction and allowing light passing through the part and atoms or molecules in the plasma atmosphere to come into contact with each other. A light propagation body is located in front of the plasma introduction part and guides light along an axis through total reflection by a side wall.

An optical method for detecting fluorine atoms in gaseous plasma is disclosed in patent application CN104237205, which is similar to the aforementioned actinometry. The method according to this solution comprises the following steps:
- introducing argon gas with the known density into an etching reaction cavity comprising fluorine atoms;
- detecting the intensity of two atomic emission spectral lines, which are approximately the same in excitation threshold energy and correspond to fluorine atoms and argon atoms, respectively;
- calculating the fluorine atom density n[F] according to the intensity of the two atomic emission spectral lines of the fluorine atoms and the argon atoms by a calculation formula described in the specification,
wherein in the formula, Q[F] represents the coefficient of the electron impact excited ground-state fluorine atoms, Q[Ar] represents the speed coefficient of the electron impact excited ground-state argon atoms, Q[Ar]/Q[F] is known physical quantity, I[F] is the corresponding spectral line intensity of the fluorine atoms, I[Ar] is the corresponding spectral line intensity of the argon atoms, and n[Ar] is the ground-state argon atom density. This method is called "actinometry" in scientific literature and has been used for decades.

A sophisticated version of calorimetry is the external heating of a catalyst with a laser beam. Patent EP3146327 discloses a device for detection and measurements of neutral hydrogen, oxygen, or nitrogen atoms in a non-equilibrium gaseous medium, said device comprising:
- a catalytic material,
- a remote source of radiation suitable for heating said catalytic material to a preset temperature, wherein said remote source of radiation is a laser, the radiation of which is guided with an optical fiber to the catalytic material,
- a detector for sensing the catalytic material temperature,
- an electronic system for controlling said remote source of radiation,
- an electronic system for controlling said detector,
- a processing unit for controlling both said electronic systems, said processing unit being designed for processing measured data from the detector and controlling the electronic system of said remote source of radiation for heating of said catalytic material to the preset temperature and keeping said preset temperature during measurement of said neutral hydrogen, oxygen or nitrogen atoms in said non-equilibrium gaseous medium, and for determining and storing a power of said remote source of radiation necessary for keeping said preset temperature, and said processing unit being designed for determining instant values of density of said hydrogen, oxygen or nitrogen atoms from the power of said remote source of radiation necessary for keeping said preset temperature.

Method for detection and measurements of neutral hydrogen, oxygen or nitrogen atoms in a non-equilibrium gaseous medium comprises:
- Inserting at least one catalytic material into said non-equilibrium gaseous medium;
- Heating said catalytic material to a preset temperature which is at least 100 K above the ambient temperature using a remote source of radiation, said remote source of radiation being a laser, the radiation of which is guided with an optical fiber to the catalytic material;
- Detecting said catalytic material temperature;
- Controlling the power of said remote source of radiation in such a manner that the temperature of said catalytic material remains substantially at the preset temperature during the measurement of neutral hydrogen, oxygen or nitrogen atoms in said non-equilibrium gaseous medium;
- Determining said power of said remote source employed to keep the preset temperature of said catalytic material;
- Transforming said power of said remote source employed to keep the preset temperature of said catalytic material to the density of said neutral atoms in said non-equilibrium gaseous medium;
- Storing and/or displaying of said density of neutral atoms in said non-equilibrium gaseous medium.

Neither of the above-mentioned techniques enables simultaneous measurements of the atom and ion density in a non-equilibrium gaseous plasma.

### Description of the solution to the technical problem

The invention addresses the disadvantages of known solutions and provides a device and a method for simultaneous measurement of charged particles and molecular fragments, preferably atoms, in a non-equilibrium plasma. The technical problem is solved as defined in independent claims, where in preferred embodiments are defined in dependent claims.

In one aspect, the present invention provides a sensor arranged to be used in a measurement system or a device for simultaneous measurement of charged particles and molecular fragments density in non-equilibrium gaseous plasma or its afterglow, wherein the sensor comprises an optical fiber segment, further comprising at least two temperature-sensing segments exhibiting different coefficients of the surface association of molecular fragments to parent molecules. Said molecular fragments are preferably selected in the group comprising oxygen, nitrogen, and hydrogen atoms, and/or said molecular fragments are selected from the group comprising NH, OH, SH, or SO. Optical fiber is apt to guide the light, for example by having a high index core and lower index cladding. Fibers using photonic crystal structure for light guidance might be also suitable. A single-mode or multimode fiber may also be used.

In a preferred embodiment, at least one temperature-sensing segment is covered with or in contact with an active material that exhibits a high coefficient for a surface association of molecular fragments to parent molecules, and at least one sensing segment is not covered with or not in the contact with any material that exhibits a high coefficient for a surface association of molecular fragments to parent molecules. A high coefficient means over 0.03, i.e., more than 3% of the molecular fragments that impinge on the surface of a material that exhibits a high coefficient are associated on the surface to form stable molecules. The material with a high coefficient may be applied to the temperature-sensing segment by coating, gluing, soldering or any other suitable manner. For example, one option is to provide the material in the shape of a thin tube, or to wind the material as a spiral on the fibre. The material with a high coefficient will be called "active material" in the text below. In most preferred embodiments, the active material is selected from the group of materials defined as catalytic or semi-catalytic in scientific literature, for example, in D. Paul et al., A review of recombination coefficients of neutral oxygen atoms for various materials. Materials. Mar. 2023, vol. 16, iss. 5. Preferbly, the active material is selected from the group of metals, metal oxides, and metal nitrides.

The at least two temperature-sensing segments are separated by a separator, wherein the separator may be a segment of an optical fiber, which ensures a separation of two temperature-sensing segments in a way that a difference in the temperatures of the two temperature-sensing segments is established more easily. The length of the temperature-sensing segments is usually less than 10 mm. In preferred embodiments, the temperature-sensing segment covered with or in contact with the active material is 50 to 1000 µm long, and the separating segment is at least 7 mm long.

The optical fiber may further comprise a narrowed segment, allowing the thermal flux from one temperature-sensing segment to another temperature-sensing segment to be suppressed.

Temperature-sensing segments may be, for example, designed as in-fiber Fabry-Perot sensors, Fiber-Bragg grating sensors (FBGs) or as in-fiber modal interferometers. Other implementations of fiber optic sensor are also possible. In cases when temperature-sensing segments are implemented as in-fiber Fabry-Perot interferometers, their length is preferably in the range between 20 µm and a few mm, or preferably between 50 µm and 1 mm.

The sensor according to the invention may be used in a measurement system for simultaneous measurements of both charged particles and molecular fragments density, wherein the optical fiber is connected to an optical fiber sensor readout unit comprising:
- a tunable laser source configured to launch laser radiation into the optical fiber, wherein said laser radiation is partially reflected by the temperature-sensing segments,
- an optical coupler, and
- at least one optical detector,
wherein the sensor readout unit is configured to acquire back-reflected spectral characteristics of the temperature-sensing segments by scanning the laser wavelength over a selected wavelength span while recording the back-reflected optical power. The acquired spectral characteristics are processed and converted to temperatures of the individual temperature-sensing segments. The signal processing and determination of the correlation between the acquired spectral characteristics and the temperature-dependent response of the sensor segments depend on the type of sensors used. In the case of fiber Bragg grating (FBG) sensors, the positions of characteristic peaks in the back-reflected spectrum determine the temperatures of individual sensing segments. In the case of Fabry-Perot sensors, the phases of the spectral interference fringes-which exhibit a characteristic frequency in the back-reflected spectrum-correlate directly with the temperatures of individual sensor segments.

The sensor according to the invention may also be installed in a plasma reactor. In a possible embodiment, the plasma reactor comprises the optical fiber with the temperature-sensing segments, which is mounted hermetically tight into a discharge chamber, and the readout unit is placed outside the discharge chamber.

In a further aspect, the invention provides a method for simultaneous measurement of charged particles and molecular fragments density in non-equilibrium gaseous plasma using the sensor described above, said method comprising at least the following steps:
a) installing the sensor in a plasma reactor,
b) determining the temperature of at least two temperature-sensing segments of the optical fiber,
c) correlating the measured difference in temperatures of at least two temperature-sensing segments to the density of charged particles and molecular fragments in the vicinity of the sensor.

The temperature of said temperature-sensing segments is determined individually by any method. For FBG sensors, the temperature may be determined by the acquisition of the back-reflected spectrum, followed by a peak search in the acquired optical spectral dataset. For FP sensors, the temperature may be determined using the extraction of phases of spectral fringes belonging to each sensing segment from the acquired spectral dataset by application of a Fast Discrete Furrier Transformation.

In the method described above, the plasma is sustained in molecular gases such as oxygen, hydrogen, nitrogen, ammonia, carbon dioxide, water vapor, or mixtures of molecular gases with a noble gas.

The invention enables the estimation of the density of positively charged ions and the measurement of the density of certain molecular fragments, such as atoms in the ground state and unstable two-atom radicals. Most preferably, the measured atoms are selected in the group comprising oxygen, hydrogen, nitrogen and/or chlorine atoms, while the measured molecular fragments are preferably selected in the group of OH, NH, CO and SO radicals. The spatial resolution of the device for plasma characterization is a few mm, and the temporal resolution is a few seconds.

The sensor for estimation of the density of both charged particles and neutral molecular fragments suitable for integration into industrial plasma reactors would enable real-time monitoring of these plasma parameters and, thus, compatibility of the reactors with the requirements of Industry 4.0.

### Brief description of the drawings

The invention will be described based on embodiments, examples and figures, which show:
- Figure 1: a schematic of the device useful for sensing non-equilibrium gaseous plasma.
- Figure 2: a first possible embodiment of the sensor.
- Figure 3: a second possible embodiment of the sensor, wherein a narrowed optical fiber is used.
- Figure 4: a third possible embodiment of the sensor comprising several temperature-sensing segments.
- Figure 5: a schematic of the plasma reactor used to probe the applicability of the methods of the invention in different conditions.
- Figure 6: the temperatures of the segments of the optical fiber for the embodiment disclosed in Figure 2, wherein the discharge in oxygen gas was turned on at 3 s and turned off at 21 s and the sensor tip was positioned 42 cm from the coil.
- Figure 7: the temperatures of the segments for embodiment disclosed in Figure 2, wherein the discharge in oxygen gas was turned on at 40 s and turned off at 70 s and the sensor tip was positioned 16 cm from the coil.
- Figure 8: the temperatures of the segments for embodiment disclosed in Figure 2, wherein the discharge in oxygen gas was turned on at 30 s and turned off at 53 s and the sensor tip was positioned inside the coil.
- Figure 9: the temperatures of the segments for embodiment disclosed in Figure 2, wherein the discharge in nitrogen gas was turned on at 3 s and turned off at 28 s and the sensor tip was positioned 42 cm from the coil.
- Figure 10: the temperatures of the segments for embodiment disclosed in Figure 4, wherein the discharge in the nitrogen and hydrogen gas mixture was turned on at 9 s and turned off at 28 s and the sensor tip was positioned 42 cm from the coil.

### Detailed description of the invention

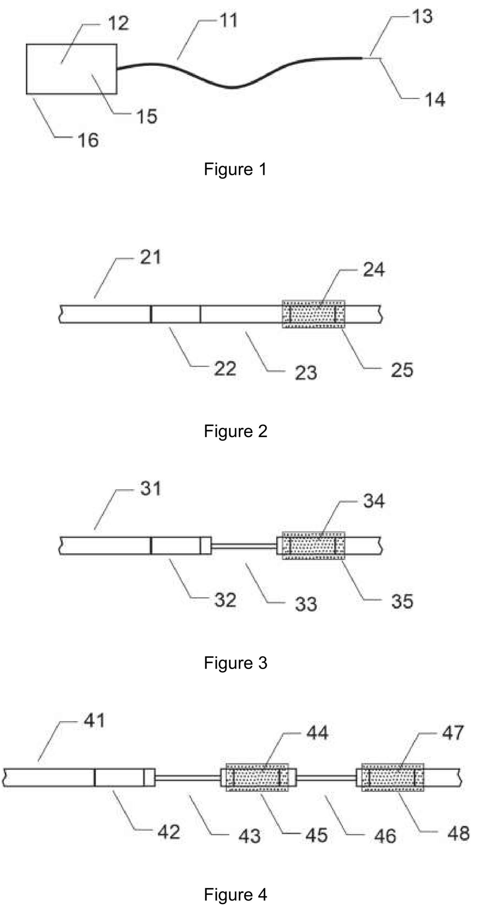

Different possible embodiments of the invention have been prepared and tested as described below in the Examples. Figures 2 to 4 show the preferred embodiments. The sensor 21 in Figure 2 consists of an optical fibre with an uncovered 22 and a covered 24 segment separated by a separator 23, wherein the covered temperature-sensing segment 24 is covered with the active material 25.

The sensor 31 in Figure 3 consists of an optical fibre with an uncovered 32 and a covered 34 segment separated by a narrowed section 33 of the optical fibre, wherein the covered temperature-sensing segment 34 is covered with the active material 35. The sensor 41 in Figure 4 comprises an uncovered 42 segment and two covered 44, 47 segments separated by narrowed sections 43, 46 of the optical fibre, wherein the covered temperature-sensing segments 44, 47 are covered with the active material 45, 48.

### Examples

The plasma reactor shown in Figure 1 was used in experiments to prove the efficiency of the method according to the invention. A system for simultaneous measurement of charged particles and molecular fragments density in non-equilibrium gaseous plasma or its afterglow, wherein said system comprises the sensor (13), wherein the sensor further comprises an optical fiber (14) comprising at least two temperature-sensing segments exhibiting different coefficients for the surface association of neutral plasma particles to parent molecules, wherein the optical fiber (11) is connected to an optical fiber sensor readout unit (16) further comprising a tunable laser source (12) configured to launch laser radiation into the optical fiber (11) and wherein the laser radiation reflects from the sensors (13) located at the other end of the optical fiber (11), and is directed through the optical fiber (11) back to a coupler, and a detector (15) wherein sensor readout unit (16) is configured to acquire back reflected spectral characteristics of the sensors, which depends on the temperature of the temperature-sensing segments.

### Example 1 - sensor tip in the flowing afterglow of oxygen plasma

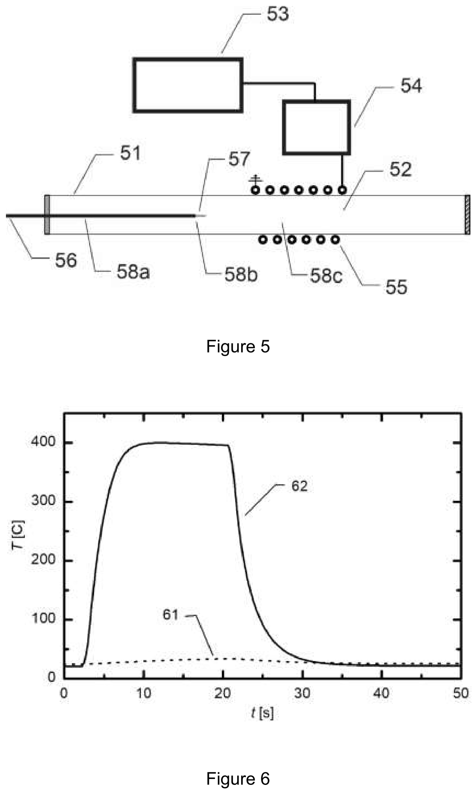

In Example 1, the sensor configuration presented in Figure 2 was used in the experimental reactor shown in Figure 5.

A discharge tube 51 is made from glass, and plasma 52 is sustained with a radiofrequency generator 53 coupled via a matching network 54. The matching network 54 is connected to a copper coil 55, so plasma 52 is sustained in the discharge tube 51. The generator 53 operates at adjustable output powers and sustains plasma 52 in one of the two distinguished modes: the E and H modes. Plasma 52 in the H mode is concentrated in the volume inside the coil 55, while plasma in the E mode expands over 10 cm from the coil 55. The sensor 56 is movable along the discharge tube 51, so the sensor tip 57 is placed at various positions, either far away from the coil (position 58a), close to the coil (position 58b), or inside the coil (position 58c). Oxygen of commercial purity 99.999% was leaked into the glass tube 51 in Figure 5 at the rate of 50 sccm. The reactor in Figure 5 was pumped on the other side with a rotary vacuum pump with a nominal pumping speed of 80 m³/h. The generator (53) operated at a constant frequency of 13.56 MHz and had an adjustable output power of up to 1000 W. The output power of 500 W was selected for this example. At the oxygen pressure of 15 Pa, plasma was sustained in the H mode inside the coil (55). The less luminous plasma in the E mode expanded about 20 cm from the coil towards the pump duct, and further along the glass tube, the density of charged particles (free electrons, positively charged molecular and atomic oxygen ions, negatively charged ions) was negligible, so afterglow expanded further from the coil towards the pump duct. The sensor was as disclosed in Figure 2, so it consisted of an uncovered 22 and a covered 24 segment. The evolution of temperatures for each segment 22 and 24 of the embodiment disclosed in Figure 2 is presented in Figure 6. The sensor tip was positioned in the afterglow region at 42 cm 58a from the coil 55. Cobalt oxide was used as an active (catalytic) material 25, and its thickness was about 1 µm.

The temperatures of the uncovered and covered segments of the optical fiber are plotted in Figure 6. The discharge of oxygen gas was turned on at 3 s and turned off at 21 s. The sensor tip was positioned 42 cm from the coil, i.e., at the position 58a in Figure 5. The uncovered segment of the optical fiber 11, which is marked as 22 in Figure 2, indicates marginal heating since the glowing plasma 52 does not expand that far from the copper coil 55, so the density of charged plasma species is marginal at position 58a. The heating curve of the uncovered segment 22 of the optical fiber 11 is marked 61 in Figure 6. The fiber segment 24, which has been covered with a film of cobalt oxide, however, heats up to about 400 °C because the neutral atoms persist at the position 58a and associate to form parent molecules on the surface of the segment 24. The heating curve of the segment covered with cobalt oxide 24 of the optical fiber 11 is marked 62 in Figure 6. The curve 61 indicates the temperature of the uncovered segment 22, and the curve 62 indicates the temperature of the covered segment 24. Using the formalism of gas thermodynamics, the density of positively charged ions is 3×10¹³ m⁻³ and the density of neutral oxygen atoms is 1×10²¹ m⁻³ in Example 1. Said formalism is well known to the skilled person, and is j = ¼ n <v>, wherein j is flux, n is density and <v> the average magnitude of the speed of thermal motion of atoms or molecular fragments.

### Example 2 - sensor tip in the oxygen plasma sustained in the E mode

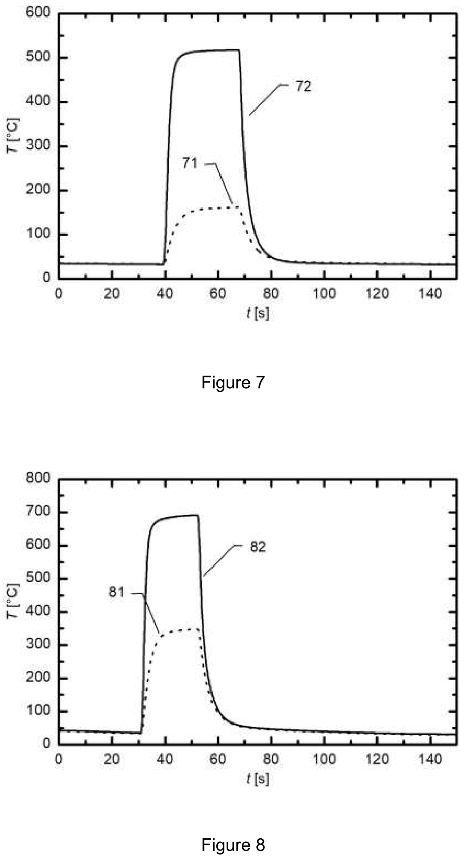

The sensor configuration presented in Figure 2 was used in the experimental reactor shown in Figure 5 for Example 2. The parameters at which plasma was sustained for this example were the same as for Example 1, but the sensor tip the end of the optical fiber 11 with mirrors 13 and 14 was positioned in the E mode region at 16 cm 58b from the copper coil 55 as shown in Figure 5. The evolution of temperatures for each measured segment 22 and 24 of the embodiment disclosed in Figure 2 is presented in Figure 7. Cobalt was used as an active (catalytic) material 25, and its thickness was about 1 µm.

The temperatures of the uncovered and covered segments of the optical fiber are plotted in Figure 7.

The discharge of oxygen gas was turned on at 40 s and turned off at 70 s. The sensor tip was positioned 16 cm from the coil, i.e., at position 58b in Figure 5. The uncovered segment of the optical fiber 11, which is marked as 22 in Figure 2, indicates moderate heating since the glowing plasma 52 in the E mode expands just over 16 cm from the copper coil 55, so the density of charged plasma species is moderate at position 58b. The heating curve of the uncovered segment 22 of the optical fiber 11 is marked 71 in Figure 7. The fiber segment 24, which has been covered with a film of cobalt oxide, however, heats up to about 500 °C because the neutral atoms are dense at this position. The heating curve of the segment covered with cobalt oxide 24 of the optical fiber 11 is marked 72 in Figure 7.

The curve 71 indicates the temperature of the uncovered segment 22, and the curve 72 indicates the temperature of the covered segment 24. The heating of the uncovered segment of the optical fiber 22 - curve 71 is much smaller than the heating of the covered segment of the optical fiber 24 - curve 72 because plasma in the E mode is characterized by a rather low density of charged particles and a high density of neutral atoms. Using the formalism of gas thermodynamics, the density of positively charged ions is 2×10¹⁶ m⁻³ and the density of neutral oxygen atoms is 2×10²¹ m⁻³ in Example 2.

### Example 3 - sensor tip in the oxygen plasma sustained in the H mode

The sensor configuration presented in Figure 2 was used in the experimental reactor shown in Figure 5 for Example 3. The parameters at which plasma was sustained for this example were the same as for Example 1. The sensor tip was positioned inside the H mode region 58c inside the coil 55, as shown in Figure 5. The evolution of temperatures for each measured segment 22 and 24 of the embodiment disclosed in Figure 2 is presented in Figure 8. Cobalt was used as an active (catalytic) material 25, and its thickness was about 1 µm.

The temperatures of the uncovered and covered segments of the optical fiber are plotted in Figure 8. The discharge of oxygen gas was turned on at 30 s and turned off at 53 s. The sensor tip was positioned inside the coil, i.e., at the position 58c in Figure 5. The uncovered segment of the optical fiber 11, which is marked as 22 in Figure 2, indicates significant heating since the glowing plasma 52 inside the coil 55 is in the H mode, so the density of charged plasma species is large at position 58b. The heating curve of the uncovered segment 22 of the optical fiber 11 is marked 81 in Figure 8. The fiber segment 24, which has been covered with a film of cobalt oxide, however, heats up even more to about 700 °C because both charged particles and the neutral atoms contribute significantly to the heating of the fiber segment covered with cobalt oxide. The heating curve of the segment covered with cobalt oxide 24 of the optical fiber 11 is marked 82 in Figure 8. The curve 81 indicates the temperature of the uncovered segment 22, and the curve 82 indicates the temperature of the covered segment 24. The heating of the uncovered segment of the optical fiber 22 - curve 81 is much smaller than the heating of the covered segment of the optical fiber 24 - curve 82, but the differences are not as large as in Example 2 Figure 7. Plasma in the H mode is characterized by a rather high density of charged particles and also a high density of neutral atoms. That is why the steady state temperatures obtained a few seconds after turning on the discharge are rather large in Figure 8 - about 700 °C for the covered segment 24 and 350 °C for the uncovered segment 22. The difference in the densities of radicals and positively charged ions is much larger than a factor of 2 because of strongly non-linear effects. Using the formalism of gas thermodynamics, the density of positively charged ions is 1×10¹⁷ m⁻³ and the density of neutral oxygen atoms is 4×10²¹ m⁻³ in Example 3.

### Example 4 - sensor tip in the flowing afterglow of nitrogen plasma

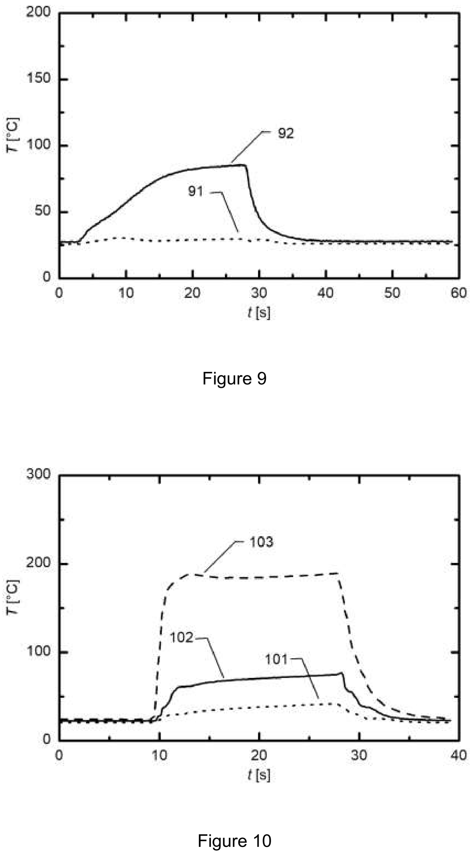

The sensor configuration presented in Figure 2 was used in the experimental reactor shown in Figure 5 for Example 4. The nitrogen of commercial purity 99.999% was leaked into the glass tube 51 in Figure 5 at the rate of 100 sccm. The reactor in Figure 5 was pumped on the other side with a rotary vacuum pump with a nominal pumping speed of 80 m³/h. The generator 53 operated at a constant frequency of 13.56 MHz and had an adjustable output power of up to 1,000 W. The output power of 100 W was selected for this example. At the nitrogen pressure of 25 Pa, plasma was sustained in the E mode, which expanded about 20 cm from the coil 55 towards the pump duct, and further along the glass tube, the density of charged particles free electrons, positively charged molecular and atomic oxygen ions, negatively charged ions was negligible so afterglow expanded further from the coil towards the pump duct. The evolution of temperatures for each measured segment 22 and 24 of the embodiment disclosed in Figure 2 is presented in Figure 9.

The discharge in nitrogen gas was turned on at 3 s and turned off at 28 s. The sensor tip was positioned 42 cm from the coil, i.e., at the position 58a in Figure 5. The uncovered segment of the optical fiber 11, which is marked as 22 in Figure 2, indicates marginal heating since the glowing plasma 52 does not expand that far from the copper coil 55, so the density of charged plasma species is marginal at position 58a. The heating curve of the uncovered segment 22 of the optical fiber 11 is marked 91 in Figure 9. The fiber segment 24, which has been covered with a platinum film, heats up to about 90 °C because the neutral atoms persist at this position. The heating curve of the segment covered with platinum 24 of the optical fiber 11 is marked 92 in Figure 9.

The sensor tip was positioned in the afterglow region at 42 cm 58a from the coil 55. Platinum was used as an active (catalytic) material 25, and its thickness was about 1 µm.

The temperatures of the uncovered and covered segments of the optical fiber are plotted in Figure 9. The curve 91 indicates the temperature of the uncovered segment 22, and the curve 92 indicates the temperature of the covered segment 22. The temperature of the covered segment 24 - curve 92 increases gradually for the first 10 seconds after turning on the discharge because of the activation of the catalytic material, which should be accomplished to achieve a stable probability for the surface association of N atoms. Once the coefficient stabilizes, the temperature of the covered segment 24 - curve 92 in Figure 9 stabilizes at about 85 °C, and the density of N atoms is deduced. Using the formalism of gas thermodynamics, the density of positively charged ions is 2×10¹³ m^{-3,} and the density of neutral nitrogen atoms is 1×10²⁰ m⁻³ in Example 4. The density of N atoms is rather small as compared to oxygen in Examples 1-3 because of the triple bond between N atoms in the N₂ molecule.

### Example 5 - sensor tip in the ammonia-producing plasma sustained in a mixture of nitrogen and hydrogen

The sensor configuration presented in Figure 4 was used in the experimental reactor shown in Figure 5 for Example 5. The nitrogen of commercial purity 99.999% and hydrogen of commercial purity 99.999% were leaked into the glass tube 51 in Figure 5 at the rate of 60 sccm nitrogen and 80 sccm hydrogen. The reactor in Figure 5 was pumped on the other side with a rotary vacuum pump with a nominal pumping speed of 80 m³/h. The generator 53 operated at a constant frequency of 13.56 MHz and had an adjustable output power of up to 1,000 W. The output power of 100 W was selected for this example. At the pressure of 25 Pa, plasma was sustained in the E mode, which expanded about 20 cm from the coil 55 towards the pump duct, and further along the glass tube, the density of charged particles free electrons, positively charged molecular and atomic oxygen ions, negatively charged ions was negligible so afterglow expanded further from the coil towards the pump duct. The evolution of temperatures for each measured segment 42, 44, and 47 of the embodiment disclosed in Figure 4 are presented in Figure 10. The sensor tip was positioned in the afterglow region at 42 cm 58a from the coil 55. Platinum was used as a catalytic (active) material in the segment 45, and copper as a catalytic (active) material in 48. Platinum is catalytic for the surface association of N atoms, while the association of H atoms on platinum is suppressed because of the extensive surface association of N atoms. N-atoms do not chemisorb on the copper surface, so they do not contribute to the heating of the copper catalyst 48. The curve 101 reveals the temperature of the uncovered segment 42. The curve 102 reveals the temperature of the segment 44 covered with platinum. The curve 103 reveals the temperature of the segment 47 covered with copper.

The discharge in the nitrogen and hydrogen gas mixture was turned on at 9 s and turned off at 28 s. The sensor tip was positioned 42 cm from the coil, i.e., at the position 58a in Figure 5. The uncovered segment of the optical fiber 11, which is marked as 42 in Figure 4, indicates marginal heating since the glowing plasma 52 does not expand that far from the copper coil 55, so the density of charged plasma species is marginal at position 58a. The heating curve of the uncovered segment 42 of the optical fiber 11 is marked 101 in Figure 9. The fiber segment 44, which has been covered with a platinum film, heats up to about 80 °C because the neutral nitrogen atoms persist at this position. The heating curve of the segment covered with platinum 44 of the optical fiber 11 is marked 102 in Figure 9. The fiber segment 47, which has been covered with a film of copper, however, heats up to about 190 °C because the neutral hydrogen atoms persist at this position, and the recombination coefficient for H atoms on copper is larger from the coefficient for N atoms on platinum. The heating curve of the segment covered with copper 47 of the optical fiber 11 is marked 103 in Figure 9.

The highest temperature in Figure 10 is observed for the copper catalyst curve 103. As exhibited in Examples 1-4, the heating at position 58a in Figure 5 of the catalytic material is practically entirely by the surface association of atoms and not by ions. Since copper is inert to nitrogen, the surface association probability for N atoms is orders of magnitude smaller than for H atoms, the heating of the segment 47 - curve 103 is attributed to the surface association of H atoms. Using the formalism of gas thermodynamics, the density of neutral hydrogen atoms is 2.5 ×10²⁰ m⁻³ in Example 5. The surface association of N atoms on the platinum catalyst 45 is the predominant heating mechanism. Taking into account this fact, the curve 102 enables the determination of the density of N atoms in the discharge tube 51 at the position 58a. Using the formalism of gas thermodynamics, the density of neutral nitrogen atoms is 1.5 ×10²⁰ m⁻³ in Example 5.

All other mechanisms except the association of N and H atoms contribute to the heating of the uncovered segment of the fiber 42. A variety of surface reactions may occur in the afterglow of plasma sustained in a gas mixture. In the H₂-N₂ gas mixture, the formation of ammonia by surface association of N and H atoms is predominant. The curve 101 only enables the determination of the maximum possible density of positive ions in plasma at the position 58a. Using the formalism of gas thermodynamics, the density of positively charged ions is below 3×10¹⁵ m⁻³ in Example 5. If heating of the uncovered segment of the optical fiber 42 by charged particles is assumed minor as compared to heating by the formation of ammonia, the production of ammonia could be estimated from curve 101. Using the formalism of gas thermodynamics, the synthesis rate of ammonia is below 5×10²¹ m⁻²s⁻¹ in Example 5.

## Claims

1. A sensor for a device for simultaneous measurement of charged particles and molecular fragments density in non-equilibrium gaseous plasma or its afterglow, wherein the sensor comprises an optical fiber comprising at least two temperature-sensing segments exhibiting different coefficients of the surface association of molecular fragments to parent molecules.

2. The sensor according to claim 1, wherein at least one temperature-sensing segment is covered or in contact with an active material that exhibits a coefficient of at least 0.03 for a surface association of molecular fragments to parent molecules, and wherein at least one sensing segment is not covered or not in contact with any active material.

3. The sensor according to claim 1 or claim 2, wherein the active material is applied to the temperature-sensing segment by coating, gluing, soldering, winding in the form of a spiral, as a tube, or any other suitable manner.

4. The sensor according to any of the preceding claims, wherein the active material is selected from the group of metals, metal oxides, and metal nitrides.

5. The sensor according to any of the preceding claims, wherein the temperature-sensing segments are selected from the group comprising in-fiber Fabry-Perot sensors, Fiber-Bragg grating sensors (FBGs), in-fiber modal interferometers, and hollow core fibers that are covered by materials with high thermal expansion.

6. The sensor according to any of the preceding claims, wherein at least two temperature-sensing segments are separated by a separator, wherein the separator may be a segment of an optical fiber.

7. The sensor according to any of the preceding claims, wherein the optical fiber further comprises a narrowed segment (33, 43, 46) so that the thermal flux from segment (34, 42, 45, 48) to segment (31, 41) is suppressed.

8. The sensor according to any of the preceding claims, wherein the length of the temperature-sensing segments is less than 10 mm.

9. The sensor according to any of the preceding claims, wherein the temperature-sensing segment (24, 34, 44, 47) covered or in contact with the material is 50 to 1000 µm long and the separating segment (23, 33, 43, 46) is at least 7 mm long.

10. The sensor according to the preceding claim, wherein said molecular fragments are selected from the group comprising oxygen, nitrogen, and hydrogen atoms, and/or said molecular fragments are selected from the group comprising NH, OH, SH, or SO.

11. A measurement system for simultaneous measurements of both charged particles and molecular fragments density in non-equilibrium plasma or its afterglow, said measurement system comprising the sensor according to any of the preceding claims, wherein the optical fiber (11) is connected to an optical fiber sensor readout unit (16) comprising a tunable laser source (12) configured to launch laser radiation into the optical fiber (11), wherein the laser radiation reflects from the sensors at the other end of the optical fiber (11), a coupler, and a detector (15) wherein sensor readout unit (16) is configured to acquire back reflected spectral characteristics of the sensors, which depend on the temperature of the optical fiber temperature segments.

12. A plasma reactor comprising at least one sensor according to any of the preceding claims, wherein the optical fiber (11) is mounted hermetically tight into a discharge chamber (51), and the readout unit (16) is placed outside the discharge chamber (51).

13. A method for simultaneous measurement of charged particles and molecular fragments density in non-equilibrium gaseous plasma using the sensor or the device according to any claim from 1 to 12, said method comprising at least the following steps:
a) installing the sensor in a plasma reactor,
b) determining the temperature of at least two temperature-sensing segments of the optical fiber,
c) correlating the measured difference in temperatures of at least two temperature-sensing segments to the density of charged particles and molecular fragments in the vicinity of the sensor.

14. The method according to the preceding claim, wherein the temperature of said segments is determined individually by any method, including the acquisition of back-reflected spectrum followed by a peak search in the acquired optical spectral dataset and extraction of phases of spectral fringes belonging to each sensing segment from the acquired spectral dataset by application of a Fast Discrete Furrier Transformation.

15. The method according to claim 14 or claim 15, wherein the plasma is sustained in molecular gases such as oxygen, hydrogen, nitrogen, ammonia, carbon dioxide, water vapor, or mixtures of molecular gases with a noble gas.
